(19) Europäisches Patentamt
European Patent Office
Office européen des brevets

(11) EP 1 637 568 B1

(12) **EUROPEAN PATENT SPECIFICATION**

(45) Date of publication and mention of the grant of the patent:
**26.12.2007 Bulletin 2007/52**

(51) Int Cl.:
***C09D 11/00*** *(2006.01)*

(21) Application number: **05020275.3**

(22) Date of filing: **16.09.2005**

(54) **Ink composition for inkjet recording and inkjet recording method**

Tintenzusammensetzung für den Tintenstrahldruck und Tintenstrahlaufzeichnungsverfahren

Composition d'encre pour l'enregistrement par jet d'encre te procede d'enregistrement par jet d'encre

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.09.2004 JP 2004271653**

(43) Date of publication of application:
**22.03.2006 Bulletin 2006/12**

(73) Proprietor: **FUJIFILM Corporation**
**Minato-ku**
**Tokyo (JP)**

(72) Inventor: **Takahashi, Miki**
**Fuji Photo Film Co., Ltd.**
**Haibara-gun**
**Shizuoka (JP)**

(74) Representative: **HOFFMANN EITLE**
**Patent- und Rechtsanwälte**
**Arabellastrasse 4**
**81925 München (DE)**

(56) References cited:
**EP-A- 1 367 102**
**EP-A- 1 518 908**
**EP-A- 1 541 644**
**WO-A-20/04061016**
**WO-A-20/04094540**
**US-A- 5 679 148**
**US-A1- 2002 086 916**

- **PATENT ABSTRACTS OF JAPAN vol. 1998, no. 01, 30 January 1998 (1998-01-30) & JP 09 249821 A (TOYO INK MFG CO LTD), 22 September 1997 (1997-09-22)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Field of the Invention

The present invention relates to an ink composition for inkjet recording and an inkjet recording method.

Background of the Invention

As for the image recording method of forming an image on a recording medium such as paper based on image data signals, an electrophotographic system, a sublimation-type or melting-type heat-transfer system, an inkjet system and the like have been heretofore known. Among these, the electrophotographic system requires a process of forming an electrostatic latent image on a photoreceptor drum through electrification and exposure and therefore, suffers from a complicated system and an expensive apparatus. The heat-transfer system uses an ink ribbon and therefore, suffers from high running cost and treatment of waste materials, though the apparatus therefor is inexpensive as compared with the electrophotographic system. On the other hand, the inkjet system uses an inexpensive apparatus and forms an image directly on a recording medium by jetting out an ink only on a required image area, so that efficient use of an ink and low running cost can be ensured. Furthermore, noises are less generated and therefore, this system is excellent as the image recording system

The inkjet recording system includes a system of ejecting ink droplets by utilizing the pressure of water vapor generated due to heat of a heating element, a system of ejecting ink droplets by utilizing a mechanical pressure pulse generated from a piezoelectric element, and a system of ejecting ink droplets containing charged particles by utilizing an electrostatic field (see, Japanese Patent No. 3,315,334 and U.S. Patent 5,158,844). In the system of ejecting ink droplets by water vapor or mechanical pressure, the ejecting direction of the ink droplets cannot be controlled and due to distortion of an ink nozzle or convection of an air, the ink droplets can be hardly landed exactly on a desired position of a printing medium.

On the other hand, the system of utilizing an electrostatic field is excellent in that since the ejecting direction of ink droplets is controlled by an electrostatic field, the ink droplet can be landed exactly on a desired position and therefore, a high-quality image-formed material (printed matter) can be prepared.

The ink composition used for the inkjet recording utilizing an electrostatic field is an ink composition comprising a dispersion medium and charged particles containing at least a coloring material (see, JP-A-8-291267 and U.S. Patent 5,952,048). The ink composition containing a coloring material is useful because four color inks of yellow, magenta, cyan and Chinese ink and furthermore, special color inks of gold or silver can be prepared by changing the coloring material, so that a color image-formed material (printed matter) can be obtained. However, in order to maintain high-seed and high-quality recording and stably output a color image-formed material (printed matter), it is confirmed that the electrophoretic mobility of charged particles at the ejection part of an inkjet recording apparatus should be sufficiently high, concentration of charged particles must satisfactorily proceed and in turn the charged particles need be imparted with adequate electric charge. A liquid developer or the like comprising toner particles of 0.5 $\mu$m or less, which is commonly used in electrophotographic systems, is unsuitable for the inkjet system. Also, the amount of electric charge of the charged particles may be increased by increasing the particle diameter, but the level thereof is not yet satisfied at present. Furthermore, the amount of electric charge of the charged particles varies in aging and therefore, an inkjet system is difficutt to establish.

Summary of the Invention

An object of an illustrative, non-limiting embodiment of the invention is to provide an ink composition and an inkjet recording method, where the electrophoretic mobility of charged particles at the ejection part of an inkjet recording apparatus is sufficiently high to allow for satisfactory concentration of charge particles and therefore, a blurless image with good quality can be obtained.

As a result of intensive investigations to attain the above-described object, the present inventors have found that when a polymer having a specific structure is used as the coating agent, the charge generation efficiency of charged particles and the electric charge density per unit volume can be enhanced and a good inkjet drawn image quality can be obtained. The present invention has been accomplished based on this finding.

That is, the present invention is as follows.

1. An ink composition for inkjet recording, including: a dispersion medium; and charged particles containing a coloring material and a coating agent, wherein the coating agent comprises at least one polymer of a graft polymer and a block polymer, the at least one polymer having a polymer segment containing at least one repeating unit of a repeating unit represented by formula (I) and a repeating unit represented by formula (II):

Formula (I):

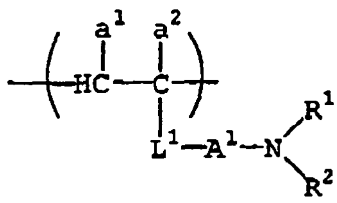

Formula (II):

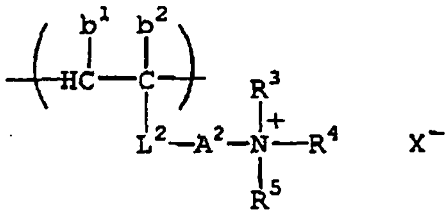

wherein $L^1$ and $L^2$ each is a linking group to a polymer main chain of the at least one polymer and represents a single bond or a divalent linking group, wherein the divalent linking group contains two or more atoms selected from the group consisting of C, H, N, O, S and P, and the divalent linking group has a total atom number of 50 or less; $A^1$ and $A^2$ each represents a single bond or a hydrocarbon group which may have a substituent; $a^1$ and $a^2$ are the same or different and each represents a hydrogen atom, a halogen atom, a cyano group or a hydrocarbon atom; $b^1$ and $b^2$ are the same or different and each represents a hydrogen atom, a halogen atom, a cyano group or a hydrocarbon group; $R^1$ to $R^5$ are the same or different and each represents a hydrogen atom or a hydrocarbon group; $R^1$ and $R^2$, and $R^3$ and $R^4$ may combine with each other to represent an organic residue forming a ring together with the nitrogen atom; and $X^-$ represents an anion.

2. An inkjet recording method including ejecting an ink droplet containing ab ink composition described in 1 above according ω an inkjet recording system utilizing an electrostatic field.

According to the present invention, an ink composition and an inkjet recording method can be provided, where the electric charge density of charged particles per unit volume can be increased, the electrophoretic mobility of charged particle at the ejection part of an inkjet recording apparatus is sufficiently high to allow for satisfactory concentration of charged particles, and a blurless image with good property can be obtained.

Brief Description of the Drawings

Fig. 1 is an entire constitutional view schematically showing an illustrative, non-limiting embodiment of the inkjet printing apparatus for use in the present invention.

Fig. 2 is a perspective view showing the constitution of an illustrative, non-limiting of the inkjet head in the inkjet recording apparatus for use in the present invention (for clearly showing the constitution, the edge of the guard electrode in each ejection part is not drawn).

Fig. 3 is a side cross-sectional view showing the distributed state of charged particles (corresponding to the portion cut along the arrow X-X in Fig. 2) when a large number of ejection parts are used in the inkjet head shown in Fig. 2.

Reference numerals and signs in Figs. 1 to 3 are described below.

| | |
|---|---|
| G | Ejecting ink droplet |
| P | Recording medium |
| Q | Ink flow |
| R | Charged particle |
| 1 | Inkjet recording apparatus |
| 2 | Ejection head |
| 3 | Ink circulating system |

| | |
|---|---|
| 4 | Head driver |
| 5 | Position-controlling means |
| 6A to 6C | Rollers for straining the conveyance belt |
| 7 | Conveyance belt |
| 8 | Conveyance belt position-detecting means |
| 9 | Electrostatic adsorption means |
| 10 | Destaticizing means |
| 11 | Dynamic means |
| 12 | Feed roller |
| 13 | Guide |
| 14 | Image fixing means |
| 15 | Guide |
| 16 | Recording medium position-detecting means |
| 17 | Exhaust fan |
| 18 | Solvent vapor adsorbent |
| 38 | Ink guide |
| 40 | Supporting rod part |
| 42 | Ink meniscus |
| 44 | Insulating layer |
| 46 | First ejection electrode |
| 48 | Insulating layer |
| 50 | Guard electrode |
| 52 | Insulating layer |
| 56 | Second ejection electrode |
| 58 | Insulating layer |
| 62 | Floating conductive plate |
| 64 | Cover film |
| 66 | Insulating member |
| 70 | Inkjet head |
| 72 | Ink flow path |
| 74 | Substrate |
| 75, 75A, 75B | Opening |
| 76, 76A, 76B | Ejection part |
| 78 | Ink guide part |

Detailed Description of the Invention

An exemplary embodiment of an ink composition of the present invention includes: a dispersion medium; and charged particles containing at least a coloring material and a coating agent. The components constituting the ink composition of the present invention are described below.

(Coating Agent)

In the ink composition of the present invention, the coloring material such as pigment is preferably dispersed (formed into particles) in the state of being coated with a coating agent. By coating the coloring material with a coating agent, the electric charge of the coloring material can be shielded and a desired electric charge can be imparted thereto. Also, when fixing is performed by heating means such as heat roller after the completion of inkjet recording on a recording medium, the coating agent is melted due to heat and efficient fixing can be attained.

The coating agent for use in the present invention is characterized by including at least one graft or block polymer having a polymer segment containing at least a repeating unit represented by formula (I) or (II):

**Formula (I):**

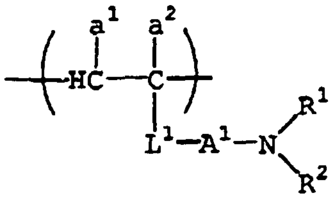

**Formula (II):**

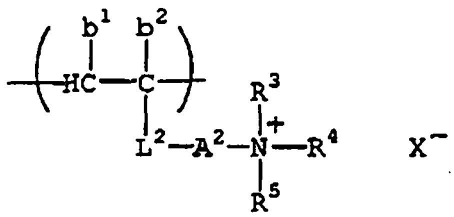

wherein $L^1$ and $L^2$ each is a linking group to the polymer main chain and represents a single bond or a divalent linking group, the divalent linking group including two or more atoms selected from C, H, N, O, S and P and having a total atom number of 50 or less, $A^1$ and $A^2$ each represents a single bond or a hydrocarbon group which may have a substituent, $a^1$ and $a^2$, or $b^1$ and $b^2$ may be the same or different and each represents a hydrogen atom, a halogen atom, a cyano group or a hydrocarbon group, $R^1$ to $R^5$ may be the same or different and each represents a hydrogen atom or a hydrocarbon group, $R^1$ and $R^2$, or $R^3$ and $R^4$ may combine with each other to represent an organic residue forming a ring together with the nitrogen atom, and X represents an anion.

Preferred structures of formulae (I) and (II) are described below.

$L^1$ and $L^2$ each preferably represents one or more linking group selected from - COO, -OCO-, $-(CH_2)_m-$ $-OCO-(CH_2)_m-$) $-COO-(CH_2)_m-$, $-COO-(CH_2)_m-NHCOO-$, -O-, - CONHCOO-, $-SO_2-$, -CO-, $-CON(Z_2)-$, $-SO_2N(Z_2)-$, a group shown below and a heterocyclic residue (wherein $Z_2$ represents a hydrogen atom or a hydrocarbon group, and m represents an integer of 1 to 10), more preferably -COO- or -CONH-.

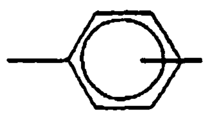

$A^1$ and $A^2$ each is preferably a phenylene group or $-(CH_2)_m-$ (m is an integer of 1 to 10), more preferably $-(CH_2)_m-$ (m is an integer of 1 to 6).

$a^1$ and $a^2$, or $b^1$ and $b^2$ may be the same or different and each represents a hydrogen atom, a halogen atom, a cyano group or a hydrocarbon group, more preferably a hydrogen atom or a methyl group.

$R^1$ to $R^5$ may be the same or different and each represents a hydrogen atom or a hydrocarbon group. Preferred examples of the hydrocarbon group include an alkyl group having from 1 to 22 carbon atoms, an alkenyl group, an aralkyl group, an alicyclic group, an aryl group and a crosslinked cyclic hydrocarbon group, and these groups each may be substituted.

More preferred examples of the hydrocarbon group for $R^1$ to $R^5$ include an alkyl group having from 1 to 22 carbon atoms, which may be substituted (e.g., methyl, ethyl, propyl, butyl, hexyl, heptyl, octyl, nonyl, decyl, dodecyl, tridecyl, tetradecyl, hexadecyl, octadecyl, eicosyl, docosyl, 2-chloroethyl, 2-bromoethyl, 2-cyanoethyl, 2-methoxycarbonylethyl, 2-methoxyethyl, 3-bromopropyl), an alkenyl group having from 4 to 18 carbon atoms, which may be substituted (e.g., 2-methyl-1-propenyl, 2-butenyl, 2-pentenyl, 3-methyl-2-pentenyl, 1-pentenyl, 1-hexenyl, 2-hexenyl, 4-methyl-2-hexenyl, decenyl, dodecenyl, tridecenyl, hexadecenyl, octadecenyl, linolenyl), an aralkyl group having from 7 to 12 carbon atoms, which may be substituted (e.g., benzyl, phenethyl, 3-phenylpropyl, naphthylmethyl, 2-naphthylethyl, chlorobenzyl, bromobenzyl, methylbenzyl, ethylbenzyl, methoxybenzyl, dimethylbenzyl, methoxybenzyl), an alicyclic group having from 5 to 8 carbon atoms, which may be substituted (e.g., cyclohexyl, 2-cyclohexylethyl, 2-cyclopentylethyl), and an aryl group having from 6 to 12 carbon atoms, which may be substituted (e.g., phenyl, naphthyl, tolyl, xylyl, propylphenyl, butylphenyl, octylphenyl, dodecylphenyl, methoxyphenyl, ethoxyphenyl, butoxyphenyl, decyloxyphenyl, chlorophenyl,

dichlorophenyl, bromophenyl, cyanophenyl, acetylphenyl, methoxycarbonylphenyl, ethoxycarbonylphenyl, butoxycarbonylphenyl, acetamidophenyl, propionamidophenyl, dodecyloylamidophenyl).

$R^1$ and $R^2$, or $R^3$ and $R^4$ may combine with each other to represent an organic residue forming a ring together with the nitrogen atom, and the organic residue may further contain a heteroatom (e.g., oxygen, nitrogen, sulfur). Examples of the cyclic amino group formed include a morpholino group, a piperidino group, a pyridyl group, an imidazolyl group and a quinolyl group.

X represents an anion. Examples of the anion component include a halogen and an alkylbenzene sulfonate ion such as monomethyl sulfate and p-toluene sulfonate, and also include various anions described in JP-A-59-137960.

Specific examples of the monomer having an amino group, corresponding to the repeating unit represented by formula (I), and specific examples of the monomer having a quaternary ammonium salt, corresponding to the repeating unit represented by formula (II) are set forth below, but the present invention is not limited thereto.

(I-1)

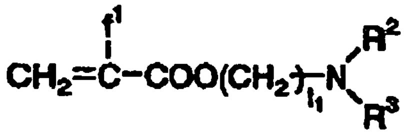

$r^1$: $-H$, $-CH_3$, $-Cl$, $-CN$

$l_1$: integer of 2 to 12

(I-2)

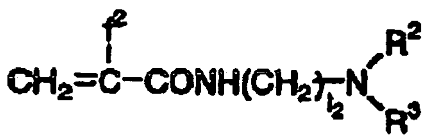

$r^2$: $-H$, $-CH_3$

$l_2$: integer of 2 to 4

(I-3)

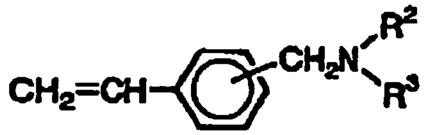

(I-4)

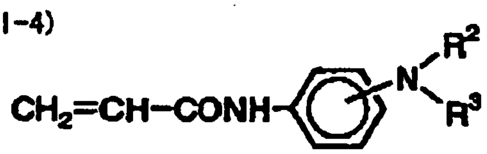

(I-5)

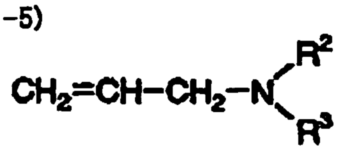

(I-6)

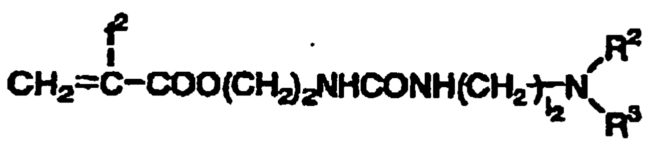

(I-7)

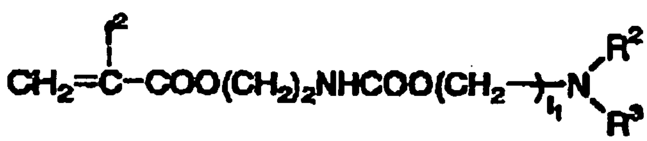

(I-8)

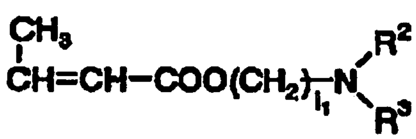

(1-9)

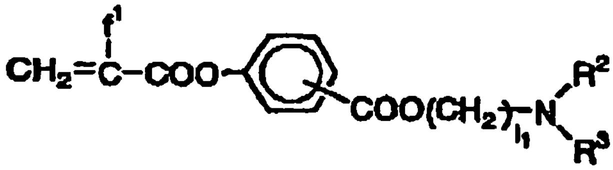

(1-10)

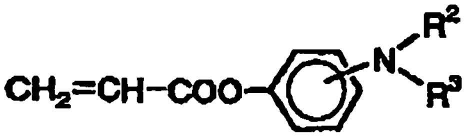

$R^2$ and $R^3$ have the same meanings as $R^1$ and $R^2$ in formula (I).

(2-1)

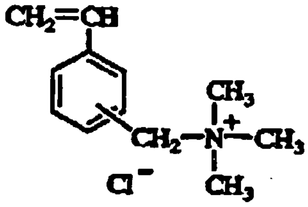

(2-2)

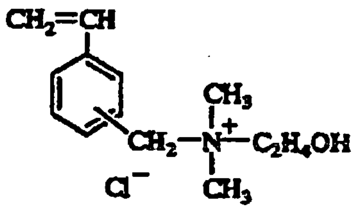

(2-3)

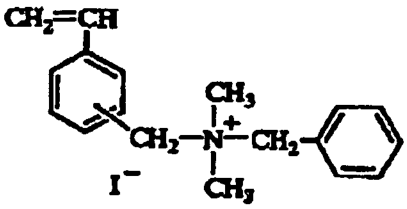

(2-4)

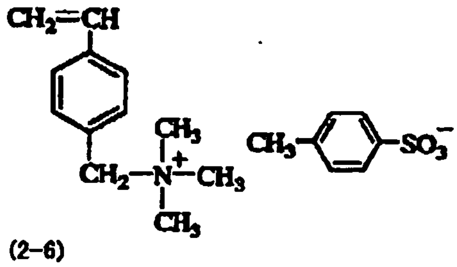

(2-5)

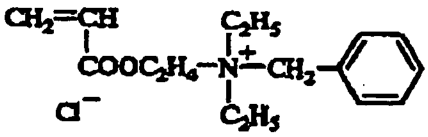

(2-6)

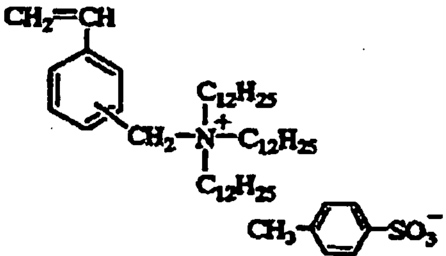

(2-7)

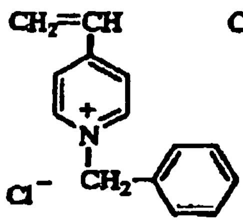

(2-8)

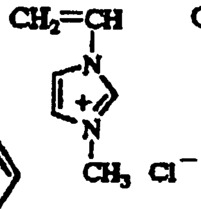

(2-9)

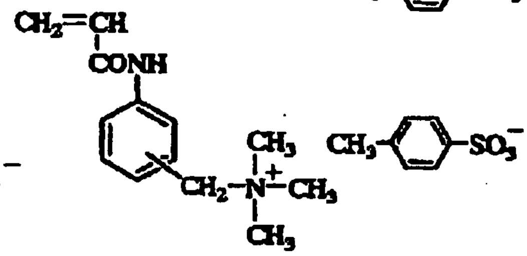

(2-10)

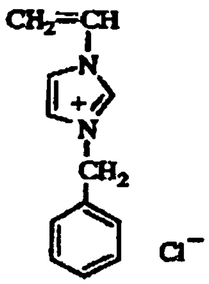

(2-11)

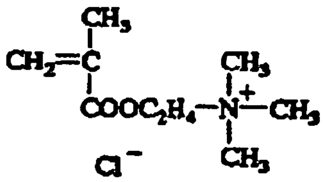

(2-12)

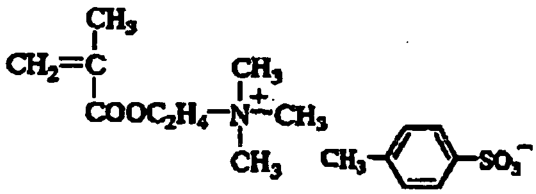

(2-13)

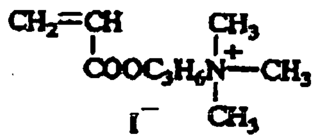

(2-14)

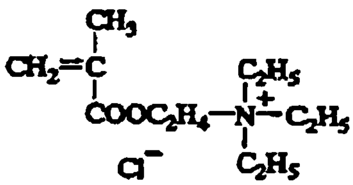

(2-15)

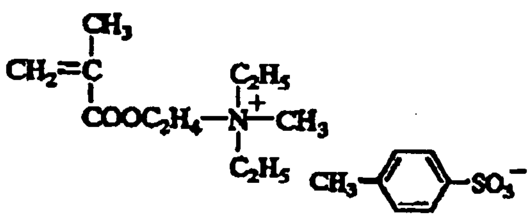

(2-16)

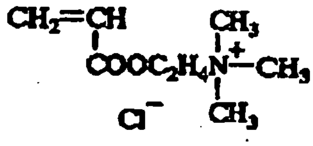

(2-17)

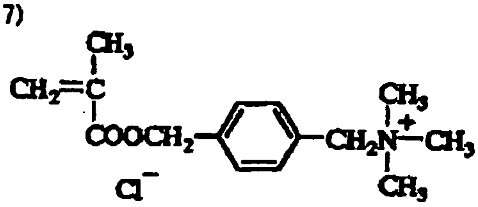

(2-18)

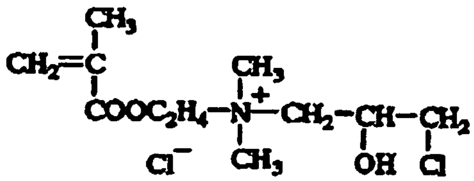

(2-19)

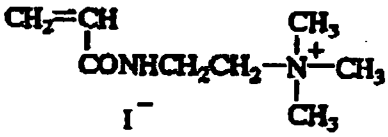

(2-20)

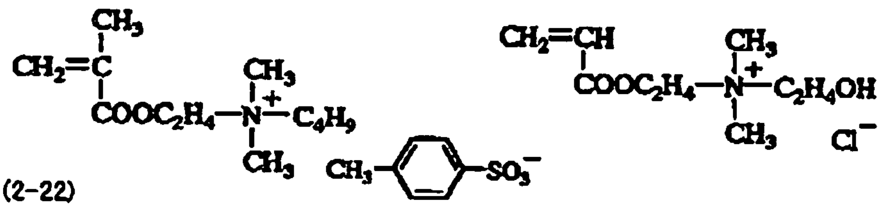

(2-21)

(2-22)

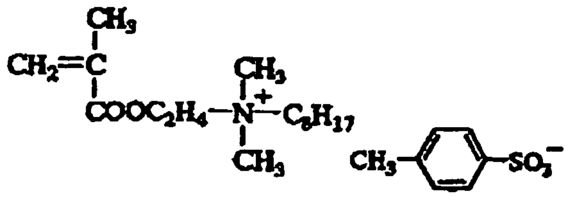

In the present invention, the graft polymer having a polymer segment containing at least a repeating unit represented by formula (I) or (II) preferably contains the repeating unit in the graft chain.

The graft polymer having a polymer segment containing at least a repeating unit represented by formula (I) or (II) is preferably obtained by copolymerizing a macromonomer having the polymer segment and containing a terminal polymerizable group with another copolymerization monomer with use of a known radical polymerization initiator.

As for the another copolymerization monomer, a known polymerizable monomer can be used and specific examples thereof include acrylic acid esters such as methyl (meth)acrylate, ethyl (meth)acrylate, (n- or i-)propyl (meth) acrylate, (n-, i-, sec-or tert-)butyl (meth)acrylate, amyl (meth)acrylate, hexyl (meth)acrylate, cyclohexyl (meth)acrylate, 2-ethylhexyl (meth)acrylate, octyl (meth)acrylate, dodecyl (meth)acrylate, stearyl (meth)acrylate, adamantyl (meth)acrylate, chloroethyl (meth)acrylate, 2-hydroxyethyl (meth)acrylate, 2-hydroxypropyl (meth)acrylate, 2-hydroxypentyl (meth) acrylate, cyclohexyl (meth)acrylate, allyl (meth)acrylate, trimethylolpropane mono(meth)acrylate, pentaerythritol mono (meth)acrylate, benzyl (meth)acrylate, methoxybenzyl (meth)acrylate, chlorobenzyl (meth)acrylate, hydroxybenzyl (meth)acrylate, hydroxyphenethyl (meth)acrylate, dihydroxyphenethyl (meth)acrylate, furfuryl (meth)acrylate, tetrahydrofurfuryl (meth)acrylate, phenyl (meth)acrylate, hydroxyphenyl (meth)acrylate, chlorophenyl (meth)acrylate, sulfamoylphenyl (meth)acrylate, 2-phenoxyethyl (meth)acrylate, 2-(hydroxyphenylcarbonyloxy)ethyl (meth)acrylate; acrylamides such as acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide. N-(tolylsulfonyl)acrylamide, N,N-dimethylacrylamide, N-methyl-N-phenylacrylamide and N-hydtoxyethyl-N-methylacrylamide; methacrylamides such as methacrylamide, N-methylmethacrylamide, N-ethylmethacryl-amide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, N,N-dimethylmethacrylamide, N-methyl-N-phenylmethacrylamide and N-hydroxyethyl-N-methylmethacrylamide; vinyl esters such as vinyl acetate, vinyl butyrate and vinyl benzoate; and styrenes such as styrene, methylstyrene, dimethylstyrene,

trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene and carboxystyrene.

The macromonomer having a polymer segment containing at least a repeating unit represented by formula (I) or (II), and having a terminal polymerizable group is preferably a copolymer of formula (I) or (II) with another copolymerizable monomer. Examples of the copolymer include those obtained by copolymerizing the monomer described as the monomer which is suitably copolymerized with the macromonomer. Among these, preferred are copolymers obtained by copolymerizing an (n-, i-, sec- or tert-)butyl (meth)acrylate, a dodecyl (meth)acrylate, a stearyl (meth)acrylate, a hexyl (meth)acrylate or a 2-ethylhexyl (meth)acrylate.

The block polymer suitably used in the present invention is described below.

In the present invention, the block copolymer having a polymer segment containing at least a repeating unit represented by formula (I) or (II) can be obtained by copolymerizing a radical polymerizable monomer represented by formula (I) or (II) with use of a radial polymerization initiating system according to a known living radical polymerization method. Examples of the living radical polymerization method include an iniferter polymerization method, an NMP (nitroxide-mediated polymerization) method, an ATRP method (atom transfer radical polymerization) method and an RAFT (reversible addition-fragmentation chain transfer) method.

The ratio of the polymer segment containing a repeating unit represented by formula (I) and/or (II) in the graft or block polymer of the present invention is from 1 to 99 mass% (weight%), preferably from 2 to 90 mass%, more preferably from 10 to 70 mass%, based on the entire polymer.

In view of easiness of particle formation, the graft or block copolymer having a polymer segment containing at least a repeating unit represented by formula (I) or (II) for use in the present invention preferably has a mass (weight) average molecular weight (Mw) of 2,000 to 1,000,000, more preferably from 3,000 to 500,000, still more preferably from 5,000 to 200,000.

The polydispersity (mass average molecular weight/ number average molecular weight, Mw/Mn) is preferably from 1.0 to 7.0, more preferably from 1.0 to 5.0, still more preferably from 1.0 to 4.0.

Furthermore, in view of easiness of fixing, the polymer preferably has a glass transition point or melting point of 40 to 120°C.

As for the physical properties of the graft or block polymer containing a repeating unit represented by formula (I) or (II) for use in the present invention, it is preferred that the dynamic modulus at 50°C is $10^6$ Pa or more, and the dynamic modulus at 100°C is from $10^3$ to $10^5$ Pa. When the dynamic modulus at 50°C is $10^6$ Pa or more, sufficiently high blocking resistance can be expressed. Also, when the dynamic modulus at 100°C is $10^3$ Pa or more, sufficiently high offset resistance can be expressed, and when $10^5$ Pa or less, the flow temperature is prevented from rising and good fixing performance is obtained.

The dynamic modulus as the physical property of polymer indicates deformability or flowability of the polymer, and the behavior thereof belongs to the academic system called rheology. The dynamic modulus is considered to have close relation to, for example, the thermal flowability, that is, flow property of the charged particle, the less transferability of image to the back surface of recording paper superposed thereon, that is, blocking resistance, and the offset of causing a part of the image to transfer to a heat roller at the thermal fixing of the ink image.

The measurement of the dynamic modulus is well known in the art and can be performed with good reproducibility but, for example, by using a measuring apparatus called rheometer and holding the heat-melted polymer between rotors (gap: I mm), vibration at a fixed frequency is applied to, then, the dynamic modulus can be determined from the slippage of frequency.

More specifically, for example, 3 g of a finely ground product of a sample is set in the sample chamber of a rheometer "Model Rheosol-G1000" manufactured by UBM and according to the predetermined measuring method, the sample is melted at 200°C, the rotors are then vibrated at a frequency of 1 Hz while decreasing the temperature, and by automatically recording the "temperature-dynamic modulus curve", the dynamic modulus can be measured. As a preferred behavior, the dynamic modulus curve preferably has two inflection points in the range from 40 to 100°C.

Other than the polymer of the present invention, another polymer component may be contained as the coating agent polymer. The content of the another polymer component in the coating agent polymer is preferably from 0 to 99 mass%, more preferably from 0 to 70 mass%.

The another polymer component is not particularly limited, but preferred examples thereof include a (meth) acryl-based polymer, a styrene/(meth)acryl-based polymer and a polyester.

The content of the coating agent is preferably from 0.1 to 40 mass% based on the entire ink composition With a content of 0.1 mass% or more, the amount of the coating agent is satisfied and sufficiently high fixing property can be obtained, and with a content of 40 mass% or less, a particle containing a coloring material and a coating agent can be successfully formed.

(Dispersion Medium)

The dispersion medium for use in the ink composition of the present invention is preferably a dielectric liquid having a high electric resistivity, specifically $10^{10}$ Ωcm or more. If a dispersion medium having a low electric resistivity is used, electric conduction is generated between adjacent recording electrodes and this is improper. The dielectric constant of the dielectric liquid is preferably 5 or less, more preferably 4 or less, still more preferably 3.5 or less. With a dielectric constant in such a range, an electric field can effectively act on charged particles in the dielectric liquid and this is preferred.

Examples of the dispersion medium for use in the present invention include a linear or branched aliphatic hydrocarbon, an alicyclic hydrocarbon, an aromatic hydrocarbon, a halogen substitution product of these hydrocarbons, and silicone oil. For example, hexane, heptane, octane, isooctane, decane, isodecane, decalin, nonane, dodecane, isododecane, cyclohexane, cyclooctane, cyclodecane, toluene, xylene, mesitylene, Isoper C, Isoper E, Isoper G, Isoper H, Isoper L, Isoper M (Isoper: a trade name of Exxon Corp.), Shellsol 70, Shellsol 71 (Shellsol: a trade name of Shell Oil Corp.), Amsco OMS, Amsco 460 solvent (Amsco: a trade name of American Mineral Spirits Co.) and KF-96L (a trade name of Shin-Etsu Silicone) may be used individually or in combination. The dispersion medium content is preferably from 20 to 99 mass% based on the entire ink composition. With a dispersion medium content of 20 mass% or more, coloring material-containing particles can be successfully dispersed in the dispersion medium and with a dispersion medium content of 99 mass% or less, the coloring material content can be satisfied.

(Coloring Material)

The coloring material which can be used in the present invention includes known dyes and pigments. The coloring material can be selected according to use or purpose. For example, in view of color tone of the image-recorded material (printed matter), a pigment is preferably used (see, for example, Ganryo Bunsan Anteika to Hyomen Shori Gijutsu·Hyoka (Dispersion and Stabilization of Pigment and Technique and Evaluation of Surface Treatment), 1st imp., Gijutsu Joho Kyokai (December 25, 2001), hereinafter sometimes referred to as "Non-Patent Document 1"). By changing the coloring material, four color inks of yellow, magenta, cyan and Chinese ink (black) can be prepared. In particular, when a pigment used for the offset printing ink or proof is used, the same color tone as the offset printed matter can be obtained and this is preferred.

Examples of the pigment for yellow ink include monoazo pigments such as C.I. Pigment Yellow 1 and C.I. Pigment Yellow 74, disazo pigments such as C.L Pigment Yellow 12 and C.I. Pigment Yellow 17, non-benzidine azo pigments such as C.I. Pigment Yellow 180, azo lake pigments such as C.L Pigment Yellow 100, condensed azo pigments such as C.I. Pigment Yellow 95, acid dye lake pigments such as C.I. Pigment. Yellow 115, basic dye lake pigments such as C.I. Pigment Yellow 18, anthraquinone-based pigments such as Flavanthrone Yellow, isoindolinone pigments such as Isoindolinone Yellow 3RLT, quinophthalone pigments such as Quinophthalone Yellow, isoindoline pigments such as Isoindoline Yellow, nitroso pigments such as C.I. Pigment Yellow 153, metal complex salt azomethine pigments such as C.I. Pigment Yellow 117, and isoindolinone pigments such as C.I. Pigment Yellow 139.

Examples of the pigment for magenta ink include monoazo-based pigments such as C.I. Pigment Red 3, disazo pigments such as C.I. Pigment Red 38, azo lake pigments such as C.I. Pigment Red 53:1 and C.I. Pigment Red 57:1, condensed azo pigments such as C.I. Pigment Red 144, acid dye lake pigments such as C.I. Pigment Red 174, basic dye lake pigments such as C.I. Pigment Red 81, anthraquinone-based pigments such as C.I. Pigment Red 177, thioindigo pigments such as C.I. Pigment Red 88, perynone pigments such as C.I. Pigment Red 194, perylene pigments such as C.I. Pigment Red 149, quinacridone pigments such as C.I. Pigment Red 122, isoindolinone pigments such as C.I. Pigment Red 180, and alizarin lake pigments such as C.I. Pigment Red 83.

Examples of the pigment for cyan ink include disazo-based pigments such as C.I. Pigment Blue 25, phthalocyanine pigments such as C.I. Pigment Blue 15, acid dye lake pigments such as C.I. Pigment Blue 24, basic dye lake pigments such as C.I. Pigment Blue 1, anthraquinone-based pigments such as C.I. Pigment Blue 60, and alkali blue pigments such as C.I. Pigment Blue 18.

Examples of the pigment for Chinese ink include organic pigments such as aniline black-based pigment, iron oxide pigments, and carbon black pigments such as furnace black, lamp black, acetylene black and channel black.

Furthermore, processed pigments as represented by microlith pigments such as microlith-A, microlith-K and microlith-T can also be suitably used. Specific examples thereof include Micolith Yellow 4G-A, Microlith Red BP-K, Microlith Blue 4G-T and Microlith Black C-T.

In addition, various pigments can be used, if desired. For example, calcium carbonate and titanium oxide pigments may be used as the pigment for white ink, aluminum powder may be used as the pigment for silver ink, and copper alloy may be used as the pigment for gold ink.

In view of easiness in the production of ink, it is fundamentally preferred to use one pigment for one color, but depending on the case, two or more pigments are preferably used in combination for adjusting the color hue. For example,

phthalocyanine is preferably mixed with carbon black for the preparation of black ink. Also, the pigment may be used after surface-treating it by a known method such as rosin treatment (see, Non-Patent Document 1, *supra).*

The pigment content is preferably from 0.1 to 50 mass% based on the entire ink composition. With a pigment content of 0.1 mass% or more, the amount of the pigment is satisfied and satisfactory color formation can be obtained in the printed matter, and with a pigment content of 50 mass% or less, coloring material-containing particles can be successfully dispersed in the dispersion medium. The pigment content is more preferably from 1 to 30 mass%.

(Dispersant)

In the present invention, a mixture of the coloring material and the coating agent is dispersed (formed into particles) in a dispersion medium and for controlling the particle diameter and preventing the precipitation of particles, it is more preferred to use a dispersant.

Suitable examples of the dispersant include surfactants as represented by sorbitan fatty acid esters such as sorbitan monooleate, and polyethylene glycol fatty acid esters such as polyoxyethylene distearate. Other examples include a copolymer of styrene and maleic acid, an amine-modified product thereof, a copolymer of styrene and (meth) acryl compound, a (meth)acryl-based polymer, a copolymer of polyethylene and (meth)acryl compound, rosin, BYK-160, 162, 164, 182 (polyurethane-based polymers produced by Byk-Chemie), EFKA-401, 402 (acryl-based polymers produced by EFKA), and Solsperse 17000, 24000 (polyester-based polymers produced by Zeneca). In the present invention, in view of long-term storage stability of the ink composition, a polymer having a mass average molecular weight of 1,000 to 1,000,000 and a polydispersity (mass average molecular weight/number average molecular weight) of 1.0 to 7.0 is preferred, and a graft or block polymer is most preferred.

The polymer which is particularly suitably used in the present invention is a graft polymer including at least a polymer component containing at least either one of the constituent units represented by the following formulae (5) and (6), and a polymer component containing a constituent unit represented by the following formula (7) at least as a graft chain.

**Formula (5):**

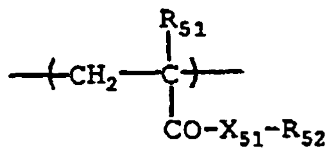

**Formula (6):**

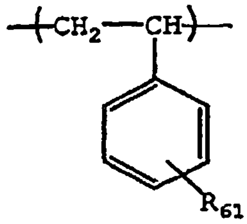

**Formula (7):**

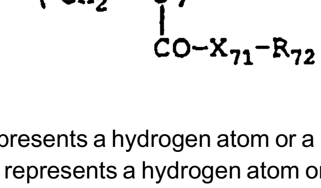

wherein $X_{51}$ represents an oxygen atom or $-N(R_{53})-$, $R_{51}$, represents a hydrogen atom or a methyl group, $R_{52}$ represents a hydrocarbon group having from 1 to 10 carbon atoms, $R_{53}$ represents a hydrogen atom or a hydrocarbon group having from 1 to 10 carbon atoms, $R_{61}$ represents a hydrogen atom, a hydrocarbon group having from 1 to 20 carbon atoms, a halogen atom, a hydroxyl group or an alkoxy group having from 1 to 20 carbon atoms, $X_{71}$ represents an oxygen atom or $-N(R_{73})-$, $R_{71}$ represents a hydrogen atom or a methyl group, $R_{72}$ represents a hydrocarbon group having from 4 to

30 carbon atoms, and $R_{73}$ represents a hydrogen atom or a hydrocarbon group having from 1 to 30 carbon atoms, provided that the hydrocarbon groups of $R_{52}$ and $R_{72}$ each may contain an ether bond, an amino group, a hydroxy group or a halogen substituent.

The above-described graft polymer can be obtained by polymerizing a radical polymerizable monomer corresponding to formula (7) preferably in the presence of a chain transfer agent, introducing a polymerizable functional group into the terminal of the polymer obtained, and copolymerizing the polymer with a radical polymerizable monomer corresponding to formula (5) or (6).

Examples of the radical polymerizable monomer corresponding to formula (5) include (meth) acrylic acid esters such as methyl (meth)acrylate, ethyl (meth)acrylate, propyl (meth)acrylate, butyl (meth)acrylate, hexyl (meth)acrylate, cyclohexyl (meth)acrylate, phenyl (meth)acrylate, benzyl (meth)acrylate and 2-hydroxyethyl (meth)acrylate, and (meth) acrylamides such as N-methyl(meth)acrylamide, N-propyl(meth)acrylamide, N-phenyl(meth)acrylamide and N,N-dimethyl(meth)acrylamide.

Examples of the radical polymerizable monomer corresponding to formula (6) include styrene, 4-methylstyrene, chlorostyrene and methoxystyrene.

Also, examples of the radical polymerizable monomer corresponding to formula (7) include hexyl (meth)acrylate, octyl (meth)acrylate, 2-ethylhexyl (meth)acrylate, dodecyl (meth)acrylate and stearyl (meth)acrylate.

Specific examples of the graft polymer include polymers represented by the following structural formulae.

(BZ-1) 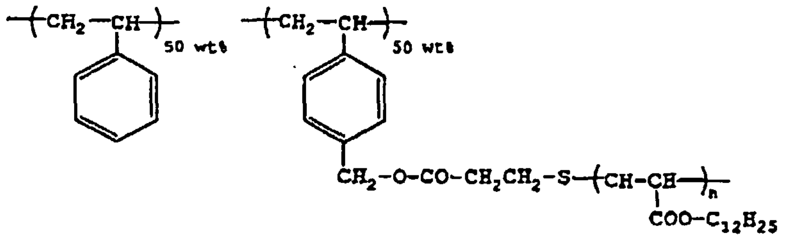

(BZ-2) 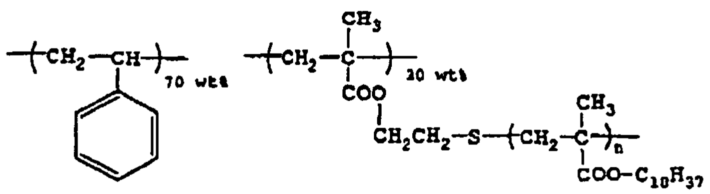

(BZ-3) 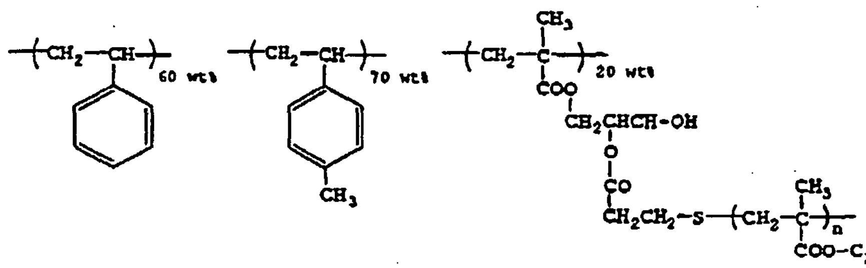

(BZ-4) 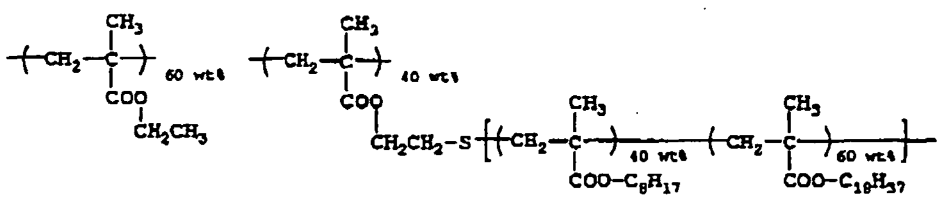

(BZ-5)

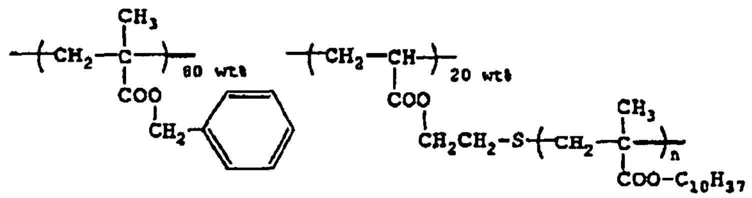

(BZ-6)

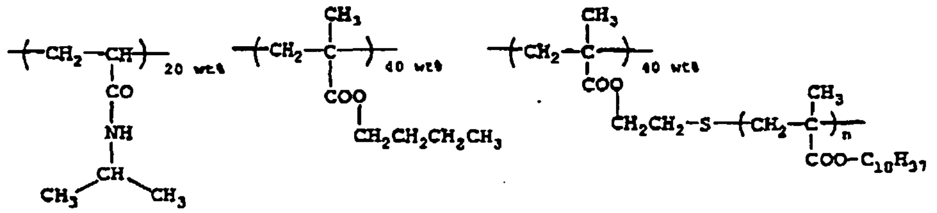

The graft polymer including a polymer component containing at least either one of the constituent units represented by formulae (5) and (6) and a polymer component containing a constituent unit represented by formula (7) at least as a graft chain may have only the constituent units represented by formula (5) and/or (6) and formula (7) or may contain another constituent component. The compositional ratio of the polymer component containing a graft chain and the polymer component other than that is preferably from 10:90 to 90:10. Within this range, good particle-forming property is obtained and particles having a desired diameter are advantageously obtained with ease. As the dispersant, these polymers may be used individually or in combination of two or more thereof.

The dispersant content is preferably from 0.01 to 30 mass% based on the entire ink composition. Within this range, good particle-forming property and particles having a desired diameter can be obtained.

(Charge-Control Agent)

In the present invention, a mixture of the coloring material and the coating agent is preferably dispersed (formed into particles) in a dispersion medium by using a dispersant and for controlling the amount of electric charge of the particles, it is more preferred to use a charge-control agent in combination.

Suitable examples of the charge-control agent include metal salts of organic carboxylic acid, such as zirconium naphthenate and zirconium octenate, ammonium salts of organic carboxylic acid, such as tetramethylammonium stearate, metal salts of organic sulfonic acid, such as sodium dodecylbenzenesulfonate and magnesium diactylsulfosuccinate, ammonium salts of organic sulfonic acid, such as tetrabutylammonium toluenesulfonate, polymers having a carboxylic acid group in the side chain, such as carboxylic acid group-containing polymer obtained by modifying a copolymer of styrene and maleic anhydride with amine, polymers having a carboxylic acid anion group in the side chain, such as copolymer of stearyl methacrylate and tetramethylammonium salt of methacrylic acid, polymers having a nitrogen atom in the side chain, such as copolymer of styrene and vinylpyridine, and polymers having an ammonium group in the side chain, such as copolymer of butyl methacrylate and N-(2-methacryloyloxyethyl)-N,N,N-trimethylammonium tosylate. The electric charge imparted to the particle may be a positive charge or a negative charge. The content of the dispersant is preferably from 0.0001 to 10 mass% based on the entire ink composition. Within this range, the electric conductivity of the ink composition can be easily controlled to the range of 10 to 300 nS/m. Furthermore, the electric conductivity of the charged particle can be easily adjusted to 50% or more of the electric conductivity of the ink composition.

(Other Components)

In the present invention, for example, an antiseptic for preventing putrefaction and a surfactant for controlling the surface tension can be further contained according to the purpose.

(Preparation of Charged Particles)

The ink composition containing charged particles of the present invention can be prepared by using these components and dispersing (particle-forming) the coloring material and the coating agent. Examples of the dispersing (particle-forming) method include the followings:

(1) a method where the coloring material and the coating agent are previously mixed and then dispersed (formed into particles) by using the dispersant and the dispersion medium, and the charge-control agent is added thereto,
(2) a method where the coloring material, the coating agent, the dispersant and the dispersion medium are simultaneously used and dispersed (formed into particles), and the charge-control agent is added thereto, and
(3) a method where the coloring material, the coating agent, the dispersant, the charge-control agent and the dispersion medium are simultaneously used and dispersed (formed into particles).

Examples of the device used for the mixing or dispersion include kneader, dissolver, mixer, high-speed disperser, sand mill, roll mill, ball mill, attritor and bead mill (see, Non-Patent Document 1, *supra*).

(Inkjet Recording Apparatus)

In the present invention, the above-described ink composition is preferably used for recording an image on a recording medium by an inkjet recording system. In the present invention, an inkjet recording system utilizing an electrostatic field is preferably employed. The inkjet recording system utilizing an electrostatic field is a system where a voltage is applied between a control electrode and a back electrode on the back surface of a recording medium, as a result, the charged particles in the ink composition are concentrated at the ejection site by the effect of electrostatic force and flown to a recording medium from the ejection site. In applying a voltage between a control electrode and a back electrode, for example, when the charged particles is positive, the control electrode serves as the positive electrode and the back electrode serves as the negative electrode. The same effect can also be obtained by electrifying the recording medium instead of applying a voltage to the back electrode.

The ink ejecting system includes, for example, a system of ejecting an ink from a needle-like tip such as injection needle and in this system, recording for a short time can be performed by using the ink composition of the present invention.

On the other hand, in a method of circulating an ink in an ink chamber having an ejection opening and applying a voltage to a control electrode formed in the periphery of the ejection opening to cause ejecting of a concentrated ink droplet from the tip of an ink guide present in the ejection opening, with the tip facing the recording medium side, both refilling of charged particles by the circulation of ink and meniscus stability of the ejection site can be attained and therefore, the recording can be stably performed for a long period of time. Furthermore, in this system, the portion of the ink coming into contact with an outside air is only the ejection opening and is very small, so that the solvent can be prevented from evaporation and the physical properties of ink can be stabilized. Therefore, this system can be suitably used in the present invention.

A constitution example of the inkjet recording apparatus to which the ink composition of the present invention is suitably applied is described below.

An apparatus of performing one-side four-color printing on a recording medium, shown in Fig. 1, is briefly described below.

The inkjet recording apparatus 1 shown in Fig. 1 comprises an ink circulating system 3 which supplies an ink to an ejection head 2 constituted by ejection heads 2C, 2M, 2Y and 2K of four colors for performing the formation of a full color image and further recovers the ink from the ejection head 2, a head driver 4 for driving the ejection head 2 by the output from an external device (not shown) such as computer and RIP, and position controlling means 5. Furthermore, the inkjet recording apparatus 1 comprises a conveyance belt 7 strained by three rollers 6A, 6B and 6C, conveyance belt position-detecting means 8 constituted by an optical sensor or the like capable of detecting the position in the cross direction of the conveyance belt 7, electrostatic adsorption means 9 for holding a recording medium P on the conveyance belt, and destaticizing means 10 and dynamic means 11 for separating the recording medium P from the conveyance 7 after the completion of image formation. Upstream and downstream the conveyance belt 7, a feed roller 12 and a guide 13 for feeding the recording medium P to the conveyance belt 7 from a stocker (not shown), and fixing means 14 and a guide 15 for fixing the ink on the recording medium P separated and at the same time, conveying the recording medium to a discharged paper stocker (not shown) are disposed. Also, in the inside of the inkjet printing apparatus 1, recording medium position-detecting means 16 is provided at the position opposing the ejection head 2 through the conveyance belt 7 and a solvent recovery part for recovering solvent vapor generated from the ink composition, comprising an exhaust fan 17 and a solvent vapor adsorbent 18, is disposed so that the vapor inside the apparatus can be discharged outside the apparatus through the recovery part.

The feed roller 12 can be a known roller and is disposed to enhance the feeding ability for the recording medium. On the recording medium P, dirt, paper dust and the like are sometimes attached and these are preferably removed. The recording medium P fed by the feed roller is conveyed to the conveyance belt 7 through the guide 13. The back surface (preferably metal back surface) of the conveyance belt 7 is placed through a roller 6A. The recording medium conveyed is electrostatically adsorbed on the conveyance belt by the electrostatic adsorption means 9. In Fig. 1, the electrostatic adsorption is performed by a scorotron charger connected to a negative high voltage power source. By the electrostatic adsorption means 9, the recording medium 9 is electrostatically adsorbed on the conveyance belt 7 without

floating and at the same time, the recording medium surface is uniformly electrified. In this example, the electrostatic adsorption means is used also as the electrification means for the recording medium, but the electrification means may be provided separately. The electrified recording medium P is conveyed to the ejection head part by the conveyance belt 7 and recording signal voltages are superposed by using the electrification potential as a bias, whereby an electrostatic inkjet image is formed. The recording medium P having formed thereon an image is destaticized by the destaticizing means 10, separated from the conveyance belt 7 by the dynamic means 11 and conveyed to the fixing part. The recording medium P separated is transferred to the image fixing means 14 and the image is fixed. The recording medium P after fixing is discharged to the discharged paper stocker (not shown) through the guide 15. This apparatus also has means for recovering solvent vapor generated from the ink composition. The recovery means comprises a solvent vapor absorbent 18 and the gas containing solvent vapor in the apparatus is introduced into the adsorbent by the exhaust fan 17 and after adsorbing and recovering the vapor, discharged outside the apparatus. The inkjet recording apparatus is not limited to this example, and the number, shape, relative disposition, charged polarity and the like of constituent devices such as roller and charger can be arbitrarily selected. Furthermore, the system is described here by referring to the drawing of a four-color image, but a system of drawing an image having a larger number of colors by using a light color ink or a special color ink in combination may be employed.

The inkjet recording apparatus for use in the above-described inkjet printing method comprises an ejection head 2 and an ink circulating system 3 and furthermore, the ink circulating system 3 has an ink tank, an ink circulating device, an ink concentration-controlling device, an ink temperature-controlling device and the like. In the ink tank, a stirring device may be contained.

The ejection head 2 may be a single channel head, a multi-channel head or a full line head, and the main scanning is performed by the rotation of the conveyance belt 7.

The inkjet head which is suitably used in the present invention performs an inkjet method of electrophoresing charged particles in the ink flow path to increase the ink concentration in the vicinity of the opening and ejecting an ink droplet, where the ink droplet is ejected by an electrostatic suction force mainly ascribable to the recording medium or the opposing electrode disposed on the back surface of the recording medium. Therefore, in the case where the recording medium or opposing electrode is not facing the head or even if facing the head, a voltage is not applied to the recording medium or opposing electrode, an ink droplet is not ejected even when a voltage is applied by mistake to the ejection electrode or vibration is applied, and the inside of the apparatus is not stained.

Figs. 2 and 3 show an ejection head which is suitably used for the above-described inkjet apparatus. As shown in Figs. 2 and 3, the inkjet head 70 comprises an electrically insulating substrate 74 constituting the top wall of an ink flow path 72 where a one-way ink flow Q is formed, and a plurality of ejection parts 76 for ejecting an ink toward a recording medium P. In all of the ejection parts 76, an ink guide part 78 for guiding an ink droplet G flown from the ink flow path 72 toward the recording medium P is provided. In the substrate 74, openings 75 each allowing for penetration of the ink guide part 78 are formed and an ink meniscus 42 is formed between the ink guide part 78 and the inner wall surface of the opening 75. The gap d between the ink guide part 78 and the recording medium P is preferably on the order of 200 to 1,000 μm. The ink guide part 78 is fixed at its lower end side to a supporting rod part 40.

The substrate 74 has an insulating layer 44 for separating two ejection electrodes at a predetermined distance and thereby establishing electrical insulation, a first ejection electrode 46 formed on the top side of the insulating layer 44, an insulating layer 48 covering the first ejection electrode 46, a guard electrode 50 formed on the top side of the insulating layer 48, and an insulating layer 52 covering the guard electrode 50. Furthermore, the substrate 74 has a second ejection electrode 56 formed on the bottom side of the insulating layer 44 and an insulating layer 58 covering the second ejection electrode 56. The guard electrode 50 is provided for preventing adjacent ejection parts from being affected in view of electric field by the voltage applied to the first ejection electrode 46 or the second ejection electrode 56.

Furthermore, the inkjet head 70 comprises a floating conductive plate 62 provided in the electrically floating state to constitute the bottom surface of the ink flow path 72 and at the same time, drift the positively charged ink particles (charged particles) R in the ink flow path 72 toward the upper side (namely, toward the recording medium side) by using an induced voltage constantly generated due to the pulsed ejection voltage applied to the first ejection electrode 46 and the second ejection electrode 56. On the surface of the floating conductive plate 62, an electrically insulating cover film 64 is formed to prevent the ink from becoming unstable in the physical properties or components as a result of, for example, injection of electric charge into the ink. The electric resistance of the insulating cover film is preferably $10^{12}$ Ω·cm or more, more preferably $10^{13}$ Ω·cm or more. Also, the insulating cover film is preferably corrosion-resistant against ink so as to prevent the floating conductive plate 62 from corroding by the ink. The bottom side of the floating electrically conducing plate 62 is covered by an insulating member 66 and by virtue of such a constitution, the floating conductive plate 62 is completely in an electrically insulated state.

One or more floating conductive plate 62 is provided per one head unit (for example, when C, M, Y and K four heads are present, each head has at least one floating conductive plate and a floating conductive plate is not commonly used between C and M head units).

For ejecting an ink from the inkjet head 70 as shown in Fig. 3 to record an image on the recording medium P,

an ink flow Q is generated by circulating the ink in the ink flow path 72 and in this state, a predetermined voltage (for example, +100 V) is applied to the guard electrode 50. Also, a positive voltage is applied to the first ejection electrode 46, the second ejection electrode 56 and the recording medium P such that a ejecting electric field high enough to cause the positively charged particles R in the ink droplet G guided by the ink guide part 78 and flown from the opening 75 to gravitate to the recording medium P (as a standard, to form a potential difference of approximately from 1 to 3.0 kV when the gap d is 500 μm) is formed between the first ejection electrode 46 and the recording medium P and between the second ejection electrode 56 and the recording medium P.

In this state, when a pulse voltage is applied to the first ejection electrode 46 and the second ejection electrode 56 according to image signals, the ink droplet G elevated in the charged particle concentration is ejected from the opening 75 (for example, when the initial concentration of charged particles is from 3 to 15%, the charged particle concentration in the ink droplet G becomes 30% or more).

At this time, the voltage value applied to the first ejection electrode 46 and the second ejection electrode 56 is adjusted such that the ink droplet G is ejected only when a pulse voltage is applied to both the first ejection electrode 46 and the second ejection electrode 56.

In this way, when a pulsed positive voltage is applied, the ink droplet G guided by the ink guide part 78 is flown from the opening 75 and attached to the recording medium P and at the same time, a positive induced voltage is generated in the floating conductive plate 62 due to the positive voltage applied to the first ejection electrode 46 and the second ejection electrode 56. Even when the voltage applied to the first ejection electrode 46 and the second ejection electrode 56 is pulsed, the induced voltage is nearly a stationary voltage. Accordingly, the charged particles R positively charged in the ink flow path 72 are moved upward by the force of the electric field formed between the floating conductive plate 62 and the recording medium P and between the guard electrode 50 and the recording medium P, and the concentration of charged particles R increases in the vicinity of the substrate 74. As shown in Fig. 3, when a large number of ejection parts (that is, channels for ejecting an ink droplet) are used, the number of charged particles necessary for the ejection becomes large, but since the first ejection electrode 46 and the second ejection electrode 56 each is increased in the number of sheets used, the induced voltage generated in the floating conductive plate 62 is elevated and the number of charged particles R moving to the recording medium side increases.

In the example described above, the color particle is positively charged, but the color particle may be negatively charged and in this case, the charged polarities all are reversed.

In the present invention, the ink ejected on a recording medium is preferably fixed by appropriate heating means. Examples of the heating means which can be used include contact-type heating devices such as heat roller, heat block and belt heating, and non-contact type heating devices such as drier, infrared lamp, visible light lamp, ultraviolet lamp and hot air-type oven. Such a heating device is preferably continued to and integrated with the inkjet recording apparatus. The temperature of the recording medium at the fixing is preferably from 40 to 200°C in view of easiness of fixing. The fixing time is preferably from 1 micro-second to 20 seconds.

(Refilling of Ink Composition)

In the inkjet recording system utilizing an electrostatic field, the charged particles in the ink composition are concentrated and ejected. Accordingly, when the ink composition is ejected for a long period of time, the amount of charged particles in the ink composition decreases and the electric conductivity of the ink composition decreases. Also, the ratio between the electric conductivity of the charged particle and the electric conductivity of the ink composition changes. Furthermore, at the ejection, charged particles having a large diameter tends to be more preferentially ejected than charged particles having a small diameter and therefore, the average diameter of charged particles decreases. In addition, the content of solid matters in the ink composition changes and therefore, the viscosity also changes.

As a result of these changes in the physical values, ejection failure may occur, the optical density of recorded image may decrease or bleeding of the ink may be generated. To cope with this, an ink composition having a higher concentration (the concentration of solid contents is higher) than the ink composition initially charged into the ink tank is refilled, whereby the amount of charged particles can be prevented from decreasing, and the electric conductivity of the ink composition and the ratio of the electric conductivity of the charged particle to the electric conductivity of the ink composition can be kept constant. Also, the average particle diameter and the viscosity can be maintained. Furthermore, by keeping constant the physical values of the ink composition, the ink is stably and uniformly ejected for a long period of time. The refilling at this time is preferably performed mechanically or manually, for example, by detecting the physical values of the ink solution on use, such as electric conductivity and optical density, and calculating the shortfall. Also, the refilling may be performed mechanically or manually by calculating the amount of the ink composition used, based on the image data.

(Recording Medium)

In the present invention, various recording mediums can be used according to uses. For example, when paper, plastic film, metal, paper laminated or vapor-deposited with plastic or metal, or plastic film laminated or vapor-deposited with metal is used, a printed matter can be directly obtained by the inkjet recording. Also, for example, when a support obtained by roughening the surface of a metal such as aluminum is used, an offset printing plate can be obtained. Furthermore, when a plastic support or the like is used, a color filter for flexographic printing plate or liquid crystal screen can be obtained. The recording medium may have a planar shape such as sheet form or may have a steric shape such as cylindrical form. When a silicon wafer or a circuit board is used as the recording medium, this can be applied to the production of a semiconductor or a printed circuit board.

Examples

The present invention is described in greater detail below by referring to Examples, but the present invention is not limited thereto.

1. Synthesis of Coating Polymer

<Synthesis of Graft Polymer (GP-1)>

In a 300 ml-volume three-neck flask containing 23.4 g of dimethylacetamide (DMAc), a mixed solution consisting of 25 g of stearyl methacrylate, 25 g of N,N-dimethylaminoethyl methacrylate, 0.91 g (11.6 mmol) of mercaptoethanol, 267 mg (1.16 mmol) of dimethyl 2,2'-azobis(2-methylpropionate) (V-601) and 93.6 g of DMAc was added dropwise at 80°C over 2.5 hours in a nitrogen atmosphere. After the reaction for another 2.5 hours, the temperature was elevated to 90°C and the reaction was allowed to proceed for 2 hours. Subsequently, 2.71 g (17.5 mmol) of 2-isocyanatoethyl methacrylate was added to the reaction solution, and the reaction was allowed to proceed at 60°C for 5 hours. The obtained reaction solution was reprecipitated with water and vacuum-dried to obtain 45 g of (Macromonomer 1).

In a 500 ml-volume three-neck flask containing 46.6 g of dimethylacetamide (DMAc), a mixed solution consisting of 70 g of methyl methacrylate, 20 g of butyl methacrylate, 10 g of (Macromonomer 1), 3.88 g of dimethyl 2,2'-azobis(2-methylpropionate) (V-601) and 186.4 g afDMAc was added dropwise at 80°C over 2.5 hours in a nitrogen atmosphere. After the reaction for another 2.5 hours, the temperature was elevated to 90°C and the reaction was allowed to proceed for 2 hours. The obtained reaction solution was reprecipitated with water and vacuum-dried to obtain 91 g of Graft Polymer (GP-1). The mass average molecular weight Mw was 49,000 and the polydispersity (mass average molecular weight/number average molecular weight) was 3.1.

<Synthesis of Graft Polymer (GP-2)>

In a 300 ml-volume three-neck flask containing 23.4 g of dimethylacetamide (DMAc), a mixed solution consisting of 30 g of stearyl methacrylate, 20 g of Monomer (M-1), 0.57 g (7.4 mmol) of mercaptoethanol, 169.2 mg (0.735 mmol) of dimethyl 2,2'-azobis(2-methylpropionate) (V-601) and 93.6 g of DMAc was added dropwise at 80°C over 2.5 hours in a nitrogen atmosphere. After the reaction for another 2.5 hours, the temperature was elevated to 90°C and the reaction was allowed to proceed for 2 hours. Subsequently, 1.26 g (8.1 mmol) of 2-isocyanatoethyl methacrylate was added to the reaction solution, and the reaction was allowed to proceed at 60°C for 5 hours. The obtained reaction solution was reprecipitated with water and vacuum-dried to obtain 46 g of (Macromonomer 2).

In a 500 ml-volume three-neck flask containing 46.6 g of dimethylacetamide (DMAc), a mixed solution consisting of 70 g of methyl methacrylate, 20 g of butyl methacrylate, 10 g of (Macromonomer 2), 3.88 g of dimethyl 2,2'-azobis(2-methylpropionate) (V-601) and 186.4 g of DMAc was added dropwise at 80°C over 2.5 hours in a nitrogen atmosphere. After the reaction for another 2.5 hours, the temperature was elevated to 90°C and the reaction was allowed to proceed for 2 hours. The obtained reaction solution was reprecipitated with water and vacuum-dried to obtain 89 g of Graft Polymer (GP-2). The mass average molecular weight Mw was 58,000 and the polydispersity (mass average molecular weight/number average molecular weight) was 3.5.

M-1:

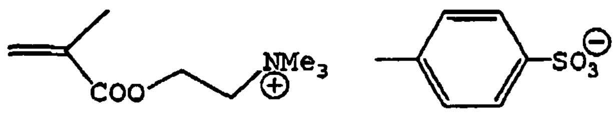

<Synthesis of Block Polymer (BP-1)>

Stearyl methacrylate was polymerized in nitrogen by using methyl 2-bromopropionate, CuBr and N,N,N',N'', N'''-pentamethylenediethylenetriamine as initiators to obtain Homopolymer (HP-1) of stearyl methacrylate. Polymer (HP-1) has a bromo group at the main chain terminal and therefore, can be polymerized in the presence of CuBr and N,N, N',N",N'''-pentamethylenediethylenetriamine. This polymer was then polymerized with MMA (methyl methacrylate) and further with N,N-dimethylaminoethyl methacrylate, whereby Block Polymer (BP-1) was obtained. The mass average molecular weight Mw was 47,000 and the polydispersity (mass average molecular weight/number average molecular weight) was 1.5.

<Synthesis of Block Polymer (BP-2)>

Homopolymer (HP-2) of dodecyl methacrylate was obtained by using methyl 2-bromopropionate, CuBr and N, N,N',N'',N'''-pentamethylenediethylenetriamine as initiators. Polymer (HP-2) has a bromo group at the main chain terminal and therefore, can be polymerized in the presence of CuBr and N,N,N',N",N'''-pentamethylenediethylenetriamine. This polymer was then polymerized with MMA and further with N,N-diethylaminoethyl methacrylate, whereby Block Polymer (BP-2) was obtained. The mass average molecular weight Mw was 51,000 and the polydispersity (mass average molecular weight/number average molecular weight) was 1.6.

<Synthesis of Comparative Polymer (AP-1)>

In a 500 ml-volume three-neck flask containing 46.6 g of 1-methoxy-2-propanol (MFG), a mixed solution consisting of 50 g (0.499 mol) of methyl methacrylate, 30 g (0.211 mol) of butyl methacrylate, 20 g (0.127 mol) of dimethylaminoethyl methacrylate, 3.85 g (16.7 mmol) of dimethyl 2,2'-azobis(2-methylpropionate) (V-601) and 186.4 g of MFG was added dropwise at 80°C over 2.5 hours in a nitrogen atmosphere. After the reaction for another 2.5 hours, the temperature was elevated to 90°C and the reaction was allowed to proceed for 2 hours. The obtained reaction solution was reprecipitated with water and vacuum-dried to obtain 96 g of Comparative Polymer (AP-1). The mass average molecular weight Mw was 25,000 and the polydispersity (mass average molecular weight/number average molecular weight) was 1.8.

2. Synthesis of Dispersant and Charge-Control Agent

Dispersant (BZ-2) was obtained by radical-polymerizing stearyl methacrylate in the presence of 2-mercaptoethanol, reacting the resulting polymer with methacrylic acid anhydride to obtain a polymer (mass average molecular weight: 7,600) of stearyl methacrylate having a methacryloyl group at the terminal, and then radical-polymerizing this polymer with styrene. The mass average molecular weight was 110,000.

Charge-Control Agent (CT-1) was obtained by reacting 1-hexadecylamine with a copolymer of 1-octadecene and maleic anhydride. The mass average molecular weight was 17,000.

(Example 1)

<Preparation of Ink Composition (EC-1)>

A cyan pigment (10 g) and 20 g of Coating Agent Polymer (GP-1) were charged into a desktop kneader PBV-0.1 manufactured by Irie Shokai K.K. and mixed under heating for 2 hours by setting the heater temperature to 100°C. Then, 30 g of the obtained mixture was coarsely ground by Trio Blender manufactured by Trio Science K.K. and further finely ground by Model SKM-10 Sample Mill manufactured by Kyoritsu Riko K.K. Thereafter, 30 g of the resultant finely ground material was predispersed together with 7.5 g of Dispersant (BZ-2), 75 g of Isoper G and glass beads having a diameter of about 3.0 mm in a paint shaker manufactured by Toyo Seiki Seisaku-Sho, Ltd. After removing glass beads, the pre-dispersion was dispersed (formed into particles) together with zirconia ceramic beads having a diameter of about

0.6 mm in Type KDL Dynomill manufactured by Shinmaru Enterprise K.K. at a rotation number of 2,000 rpm for 5 hours while keeping the inner temperature at 25°C and for another 5 hours at 45°C. After removing zirconia ceramic beads, 316 g of Isoper G and 0.6 g of Charge-Control Agent (CT-1) were added to the resultant liquid dispersion to obtain Ink Composition (EC-1).

The obtained (EC-1) was subjected to Inkjet Recording/Evaluation of Image and Evaluation of Electric Charge described later. The results are shown in Table 1.

(Examples 2 to 4)

Inks (EC-2) to (EC-4) were prepared in the same manner by using thoroughly the same materials except that out of the materials used, Coating Agent (GP-1) was changed to (GP-2), (BP-1) and (BP-2), respectively.

(Comparative Example 1)

Ink Composition (RC-1) was prepared in the same manner as in Example 1 except that Coating Agent (GP-1) in Example 1 was changed to Comparative Polymer (AP-1), and subjected to Inkjet Recording/Evaluation of Image and Evaluation of Electric Charge in the same manner as in Example 1. The results are shown in Table 1.

(Comparative Example 2)

Ink Composition (RC-2) was prepared in the same manner as in Example 1 except that Coating Agent (GP-1) in Example 1 was changed to a comparative copolymer, that is, polymethyl methacrylate (Mw: 15,000) (AP-2) produced by Aldrich, and subjected to Inkjet Recording/Evaluation of Image and Evaluation of Electric Charge in the same manner as in Example 1. The results are shown in Table 1.

<Inkjet Recording/Evaluation of Image>

The ink composition obtained was filled in the ink tank of the inkjet recording apparatus shown in Figs. 1 to 3. The ejection head used here was a 150-dpi (stagger arrangement in three arrays with a channel density of 50 dpi) 833-channel head of the type shown in Fig. 2, and the fixing means used was a silicon rubber-made heat roller self-containing a heater of 1 kW. As the ink temperature-controlling means, an immersion heater and a stirring blade were provided in the ink tank, the ink temperature was set to 30°C and the temperature was controlled by a thermostat while rotating the stirring blade at 30 rpm. The stirring blade was used here to serve also as the stirring means for preventing precipitation and aggregation. A part of the ink flow path was made transparent, and an LED light-emitting device and a light-detecting device were disposed to sandwich the transparent portion. Based on the output signal therefrom, the concentration was controlled by charging a diluting solution (Isoper G) for ink or a concentrated ink (prepared by adjusting the solid content concentration of the ink composition prepared above to a 2-fold concentration). The recording medium used was a slightly coated paper sheet for offset printing. After removing dusts on the surface of the recording medium by air pump suction, the ejection head was approximated to the recording medium until the image-forming position. Then, the image data to be recorded were transmitted to the image data arithmetic and control part and the ink composition was ejected by sequentially moving the ejection head while conveying the recording medium by the rotation of the conveyance belt, thereby forming an image with an image drawing resolution of 2,400 dpi. The conveyance belt used here was obtained by laminating a metal belt and a polyimide film. In the vicinity of one edge of this belt, a linear marker was disposed along the conveyance direction and while optically reading this marker by the conveyance belt position-detecting means and driving the position-controlling means, the image was formed. At this time, the distance between the ejection head and the recording medium was kept to 0.5 mm according to the output from an optical gap-detecting device. The surface potential of the recording medium at the ejection was set to -1.5 kV and in performing the ejection, a pulse voltage of +500 V was applied (pulse width: 50 μsec) and the image was formed at a driving frequency of 15 kHz.

The degree of streaked unevenness or bleeding of ink on the gray scale image-recorded material (printed matter) obtained was evaluated.

<Evaluation of Electric Charge>

The amount of electric charge of the ink composition was determined from the specific electric conductivity measured at an applied voltage of 5 V and a frequency of 1 kHz by using the above-described LCR meter and an electrode for liquid (Model LP-05, manufactured by Kawaguchi Electric Works Co., Ltd.) by using an LCR meter (AG 4311, manufactured by Ando Electric Co., Ltd.), and the electric conductivity (amount of electric charge) of the charged particle was determined by subtracting the specific electric conductivity of the supernatant obtained by centrifugation of

the ink composition, from the specific electric conductivity of the entire ink composition. Here, the centrifugation was performed at a rotation number of 14,500 rpm and a temperature of 23°C for 30 minutes by using a compact high-speed cooling centrifuge (SRX-201, manufactured by Tomy Seiko Co., Ltd.).

The charge generation efficiency of charged particle was determined by the following formula:

$$\text{Charge generation efficiency (\%) of charged particle} = (\text{amount of electric charge Q1 of charged particle/amount of electric charge Q2 of ink composition}) \times 100$$

Table 1

Table 1

| | Ink Composition | Coating Agent Polymer | Amount of Electric Charge of Charged Particle (pS/cm) | Charge Generation Efficiency of Charged Particle (%) | Image Quality of Inkjet Drawing |
|---|---|---|---|---|---|
| Example 1 | EC-1 | GP-1 | 900 | 95 | A |
| Example 2 | EC-2 | GP-2 | 910 | 96 | A |
| Example 3 | EC-3 | SP-1 | 896 | 94 | A |
| Example 4 | EC-4 | BP-2 | 905 | 95 | A |
| Comparative Example 1 | RC-1 | AP-1 | 780 | 75 | A |
| Comparative Example 2 | RC-2 | AP-2 | 450 | 45 | B |

Image Quality of Inkjet Drawing:

The degree of blurring of the drawn image was evaluated with an eye.

A: No blurring.
B: Slightly blurred.
C: Blurred.

While the invention has been described in detail and with reference to specific embodiments thereof, it will be apparent to one skilled in the art that various changes and modifications can be made therein without departing from the spirit and scope thereof.

The present application claims foreign priority based on Japanese Patent Application No. JP2004-271653, filed September 17 of 2004, the contents of which is incorporated herein by reference.

## Claims

**1.** An ink composition for inkjet recording, comprising:

a dispersion medium; a charge-control agent; and
charged particles comprising a coloring material and a coating agent,
wherein the coating agent comprises at least one polymer of a graft polymer and a block polymer, the at least one polymer having a polymer segment containing at least one repeating unit of a repeating unit represented

by formula (I) and a repeating unit represented by formula (II):

**Formula (I):**

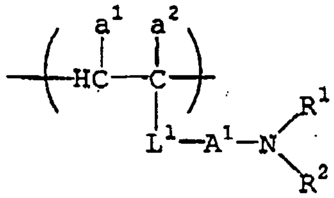

**Formula (II):**

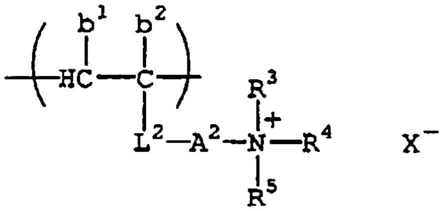

wherein $L^1$ and $L^2$ each is a linking group to a polymer main chain of the at least one polymer and represents a single bond or a divalent linking group, wherein the divalent linking group comprises two or more atoms selected from the group consisting of C, H, N, O, S and P, and the divalent linking group has a total atom number of 50 or less; $A^1$ and $A^2$ each represents a single bond or a hydrocarbon group which may have a substituent; $a^1$ and $a^2$ are the same or different and each represents a hydrogen atom, a halogen atom, a cyano group or a hydrocarbon atom; $b^1$ and $b^2$ are the same or different and each represents a hydrogen atom, a halogen atom, a cyano group or a hydrocarbon group; $R^1$ to $R^5$ are the same or different and each represents a hydrogen atom or a hydrocarbon group; $R^1$ and $R^2$, and $R^3$ and $R^4$ may combine with each other to represent an organic residue forming a ring together with the nitrogen atom; and $X^-$ represents an anion.

2. The ink composition for inkjet recording according to claim 1, wherein $L^1$ and $L^2$ each represents a linking group comprising at least one selected from the group consisting of -COO, -OCO-, $-(CH_2)_m-$ $-OCO-(CH_2)_m-$, $-COO-(CH_2)_m-$, $-COO-(CH_2)_m-NHCOO-$, -O-, -CONHCOO-, $-SO_2-$, -CO-, $-CON(Z_2)-$, $-SO_2N(Z_2)-$,

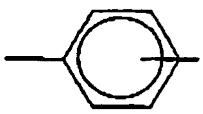,

a heterocyclic residue, wherein $Z_2$ represents a hydrogen atom or a hydrocarbon group, and m represents an integer of 1 to 10.

3. The ink composition for inkjet recording according to claim 1, wherein $A^1$ and $A^2$ each is a phenylene group or $-(CH_2)_m-$, and m is an integer of 1 to 10.

4. The ink composition for inkjet recording according to claim 1, wherein the hydrocarbon group is an alkyl group having from 1 to 22 carbon atoms, an alkenyl group, an aralkyl group, an alicyclic group, an aryl group or a crosslinked cyclic hydrocarbon group.

5. The ink composition for inkjet recording according to claim 1, further comprising a dispersant.

6. The ink composition for inkjet recording according to claim 5, wherein the charged particles are dispersed in the dispersion medium with the dispersant.

7. The ink composition for inkjet recording according to claim 1, which is for an inkjet recording system utilizing an electrostatic field.

8. An inkjet recording method comprising ejecting an ink droplet containing an ink composition according to claim 1 by utilizing an electrostatic field.

**Patentansprüche**

1. Tintenzusammensetzung für die Tintenstrahlaufzeichnung, umfassend:

ein Dispersionsmedium;
ein Ladungskontrollmittel; und
geladene Partikel, die einen Färbungsstoff und ein Beschichtungsmittel umfassen,
wobei das Beschichtungsmittel mindestens ein Polymer aus einem Pfropfpolymer und einem Blockpolymer umfaßt, wobei das mindestens eine Polymer ein Polymersegment hat, das mindestens eine Repetiereinheit aus einer Repetiereinheit, die wiedergegeben ist durch Formel (I), und einer Repetiereinheit, die wiedergegeben ist durch Formel (II), enthält:

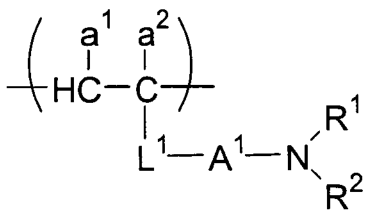 (I)

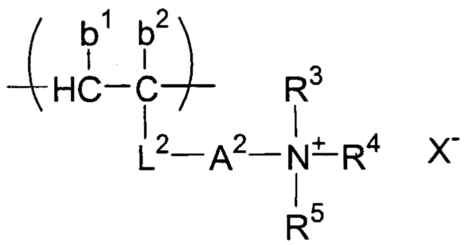 (II)

worin $L^1$ und $L^2$ jeweils eine Verknüpfungsgruppe an eine Polymerhauptkette des mindestens einen Polymers ist und eine Einfachbindung oder eine zweiwertige Verknüpfungsgruppe bezeichnet, wobei die zweiwertige Verknüpfungsgruppe zwei oder mehr Atome umfaßt, ausgewählt aus der Gruppe bestehend aus C, H, N, O, S und P, und die zweiwertige Verknüpfungsgruppe eine Gesamtatomzahl von 50 oder weniger hat; $A^1$ und $A^2$ jeweils eine Einfachbindung oder eine Kohlenwasserstoffgruppe, die einen Substituenten haben kann, bezeichnet; $a^1$ und $a^2$ gleich oder verschieden sind und jeweils ein Wasserstoffatom, ein Halogenatom, eine Cyanogruppe oder eine Kohlenwasserstoffgruppe bezeichnet; $b^1$ und $b^2$ gleich oder verschieden sind und jeweils ein Wasserstoffatom, ein Halogenatom, eine Cyanogruppe oder eine Kohlenwasserstoffgruppe bezeichnet; $R^1$ bis $R^5$ gleich oder verschieden sind und jeweils ein Wasserstoffatom oder eine Kohlenwasserstoffgruppe bezeichnet; $R^1$ und $R^2$ sowie $R^3$ und $R^4$ miteinander verbunden sein können, um einen organischen Rest darzustellen, der zusammen mit dem Stickstoffatom einen Ring bildet; und X- ein Anion bezeichnet.

2. Tintenzusammensetzung für die Tintenstrahlaufzeichnung gemäß Anspruch 1, in der $L^1$ und $L^2$ jeweils eine Verknüpfungsgruppe bezeichnet, die mindestens eine umfaßt, ausgewählt aus der Gruppe bestehend aus -COO, -OCO-, $-(CH_2)_m-$, $-OCO-(CH_2)_m-$, $-COO-(CH_2)_m-$, $-COO-(CH_2)_m-$, NHCOO-, -O-; -CONHCOO-, $-SO_2-$, -CO-, -CON $(Z_2)$-, $-SO_2N(Z_2)-$,

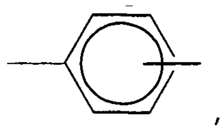

einem heterocyclischen Rest, worin $Z_2$ ein Wasserstoffatom oder eine Kohlenwasserstoffgruppe bezeichnet, und m eine ganze Zahl von 1 bis 10 bedeutet.

3. Tintenzusammensetzung für die Tintenstrahlaufzeichnung gemäß Anspruch 1, in der $A^1$ und $A^2$ jeweils eine Phenylengruppe oder $-(CH_2)_m-$ ist und m eine ganze Zahl von 1 bis 10 ist.

4. Tintenzusammensetzung für die Tintenstrahlaufzeichnung gemäß Anspruch 1, in der die Kohlenwasserstoffgruppe eine Alkylgruppe mit 1 bis 22 Kohlenstoffatomen, eine Alkenylgruppe, eine Aralkylgruppe, eine alicyclische Gruppe, eine Arylgruppe oder eine vernetzte cyclische Kohlenwasserstoffgruppe ist.

5. Tintenzusammensetzung für die Tintenstrahlaufzeichnung gemäß Anspruch 1, die ferner ein Dispergiermittel umfaßt.

6. Tintenzusammensetzung für die Tintenstrahlaufzeichnung gemäß Anspruch 5, in der die geladenen Partikel in dem Dispersionsmedium mit dem Dispergiermittel dispergiert sind.

7. Tintenzusammensetzung für die Tintenstrahlaufzeichnung gemäß Anspruch 1, die für ein Tintenstrahlaufzeichnungssystem unter Verwendung eines elektrostatischen Feldes dient.

8. Tintenstrahlaufzeichnungsverfahren, welches das Ausstoßen eines Tintentropfens, der eine Tintenzusammensetzung gemäß Anspruch 1 enthält, unter Verwendung eines elektrostatischen Feldes umfaßt.

## Revendications

1. Composition d'encre pour enregistrement par jet d'encre, comprenant :

un milieu de dispersion ; un agent de contrôle de charge ; et
des particules chargées comprenant un matériau colorant et un agent de revêtement,
dans laquelle l'agent de revêtement comprend au moins un polymère d'un polymère greffé et un polymère séquencé, le au moins un polymère ayant un segment polymère contenant au moins une unité répétitive d'une unité répétitive représentée par la formule (I) et d'une unité répétitive représentée par la formule (II) :

Formule (I) :

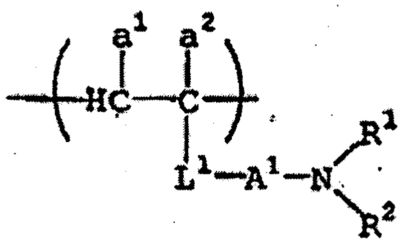

Formule (II) :

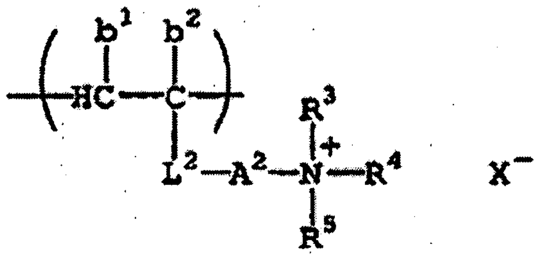

dans lesquelles $L^1$ et $L^2$ sont chacun un groupe de liaison à une chaîne polymère principale du au moins un polymère et représentent chacun une liaison simple ou un groupe de liaison divalent, le groupe de liaison divalent comprenant deux ou plusieurs atomes sélectionnés dans le groupe constitué par C, H, N, O, S et P, et le groupe de liaison divalent ayant un nombre d'atomes total de 50 ou moins ; $A^1$ et $A^2$ représentent chacun une liaison simple ou un groupe hydrocarboné qui peut avoir un substituant ; $a^1$ et $a^2$ sont les mêmes ou différents et chacun représente un atome d'hydrogène, un atome d'halogène, un groupe cyano ou un atome d'hydrocarbone ; $b^1$ et $b^2$ sont les mêmes ou différents et chacun représente un atome d'hydrogène, un atome d'halogène, un groupe cyano ou un groupe hydrocarboné ; $R^1$ à $R^5$ sont les mêmes ou différents et chacun représente un atome d'hydrogène ou un groupe hydrocarboné ; $R^1$ et $R^2$, et $R^3$ et $R^4$ peuvent se combiner l'un avec l'autre pour représenter un résidu organique formant un cycle conjointement avec l'atome d'azote ; et X- représente un anion.

**2.** Composition d'encre pour enregistrement par jet d'encre selon la revendication 1, dans laquelle $L^1$ et $L^2$ représentent chacun un groupe de liaison comprenant au moins un groupe sélectionné dans le groupe constitué par -COO, -OCO-, $-(CH2)_m-$, $-OCO-(CH_2)_m-$, $-COO-(CH_2)_m-$, $-COO-(CH_2)_m-NHCOO-$, -O-, -CONHCOO-, $-SO_2-$, -CO-, $-CON(Z_2)-$, $-SO_2N(Z_2)-$,

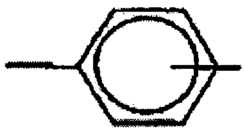

,

un résidu hétérocyclique, $Z_2$ représentant un atome d'hydrogène ou un groupe hydrocarboné, et m représente un nombre entier de 1 à 10.

**3.** Composition d'encre pour enregistrement par jet d'encre selon la revendication 1, dans laquelle $A^1$ et $A^2$ représentent chacun un groupe phénylène ou $-(CH_2)_m-$, et m est un nombre entier compris de 1 à 10.

**4.** Composition d'encre pour enregistrement par jet d'encre selon la revendication 1, dans laquelle le groupe hydrocarboné est un groupe alkyle ayant entre 1 et 22 atomes de carbone, un groupe alcényle, un groupe aralkyle, un groupe alicyclique, un groupe aryle ou un groupe hydrocarboné cyclique réticulé.

**5.** Composition d'encre pour enregistrement par jet d'encre selon la revendication 1, comprenant en outre un dispersant.

**6.** Composition d'encre pour enregistrement par jet d'encre selon la revendication 5, dans laquelle les particules chargées sont dispersées dans le milieu de dispersion avec le dispersant.

**7.** Composition d'encre pour enregistrement par jet d'encre selon la revendication 1, qui est destinée à un système d'enregistrement par jet d'encre utilisant un champ électrostatique.

8. Procédé d'enregistrement par jet d'encre comprenant l'éjection d'une gouttelette d'encre contenant une composition d'encre selon la revendication 1 par utilisation d'un champ éléctrostatique.

FIG. 1

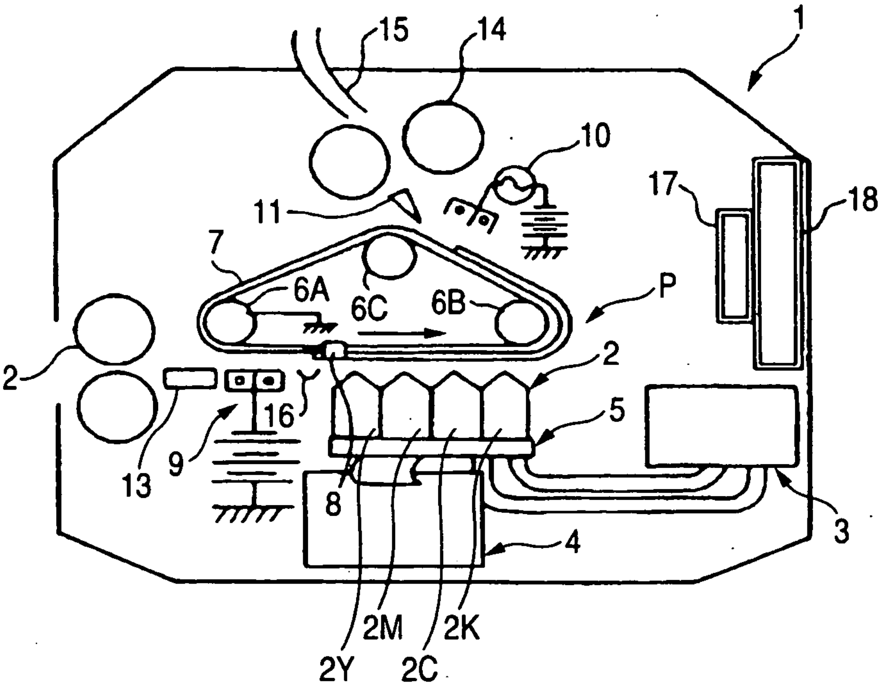
1
15
14
10
11
17
18
7
6A
6C
6B
P
12
2
16
5
13
9
8
3
4
2M
2K
2Y
2C

FIG. 2

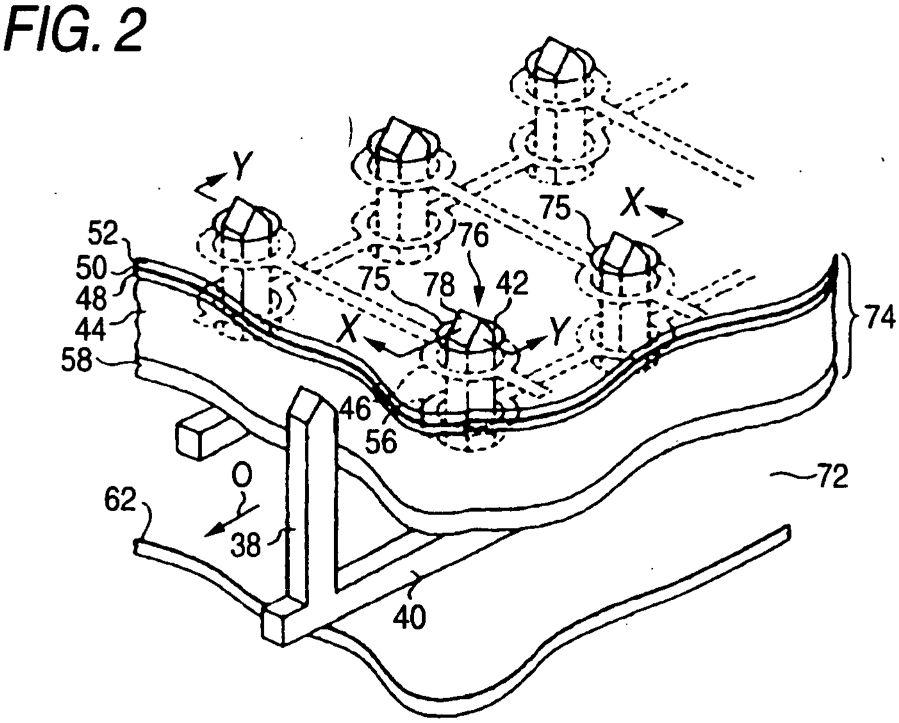
Y
75
X
52
50
48
44
58
76
78
42
75
X
Y
74
46
56
72
O
62
38
40

FIG. 3

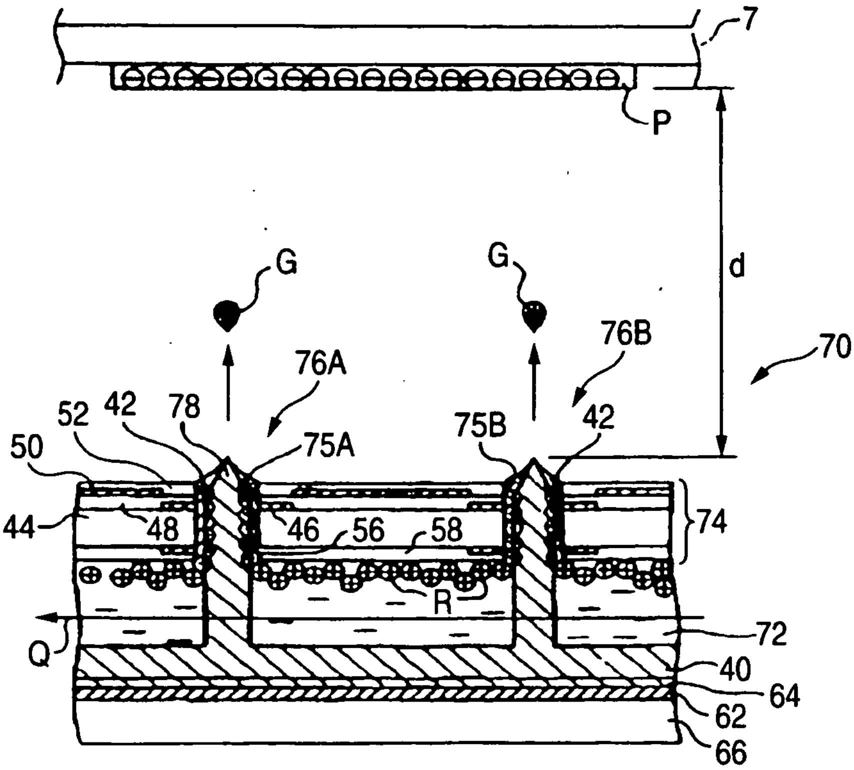
7
P
d
G
G
70
76A
76B
75A
75B
78
42
52
50
44
48
46
56
58
74
R
72
Q
40
64
62
66

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3315334 B
- US 5158844 A
- JP 8291267 A
- US 5952048 A
- JP 59137960 A
- JP 2004271653 A